# EUROPEAN PATENT APPLICATION

(11) **EP 1 415 526 A1**
(43) Date of publication of application: **06.05.2004**
(21) Application number: 03023861.2
(22) Date of filing: 21.10.2003
(51) Int. Cl.: A01D 34/82

(54) **Enclosed lawnmower engine with underdeck muffler**

(30) Priority: 31.10.2002 US 422732 P; 07.04.2003 US 408290
(71) Applicant: TECUMSEH PRODUCTS COMPANY, Tecumseh Michigan 49286 (US)
(72) Inventor: Brower, David R., Beaver Dam Winconsin 53916 (US)
(74) Representative: Riebling, Peter, Dr.-Ing.

(57) **Abstract**

A lawnmower (20) having a deck (22) with an internal combustion engine (24) attached to the upper surface of the deck and a muffler (30) located below the deck. The engine includes a crankshaft (34) having an output end (38) connected to a mower blade (40). The muffler is located about the output end of the crankshaft. A shroud (48) substantially encases the engine with air inlets (50) formed therein. Cooling air is drawn into the shroud through the inlets and flows around the engine to cool the engine. The cooling air flows below the lawnmower deck to cool the muffler and mix with the exhaust gas exiting the muffler to cool the expelled exhaust gas and the engine.

## Description

The present invention relates to lawnmowers, and more particularly to the reduction of engine noise and to cooling the engine of the lawnmower.

In general, a lawnmower includes an internal combustion engine mounted to a mower deck. Mounted for rotation with the engine crankshaft is a flywheel or fan which draws cooling air over the engine. During engine operation, a fuel/air mixture goes through a combustion process producing exhaust gas. The exhaust gas is released through a muffler which is generally located on one side of the engine. The exhaust gas is at a significantly high temperature when it enters the muffler causing the muffler to be hot to the touch. Typically, a heat shield is provided to cover the muffler to prevent direct contact with the muffler.

A shroud is mounted to the top of the engine. Air inlets are provided in the shroud through which cooling air is drawn by rotation of the flywheel. The shroud directs the cooling air downwardly over the engine components. The shroud typically covers only the upper portion of the engine, extending just beneath the flywheel. Some of the engine components which are not covered by the shroud are left exposed to the ambient air, which helps to dissipate heat produced by such components.

A problem with having large portions of the engine uncovered is that the noise produced by the engine and the muffler is not deadened. Further, exposure of the muffler requires additional parts such as the heat shield to prevent contact with the muffler. Additionally, the exposed portions of the engine may collect debris such as grass clippings.

The present invention relates to a lawnmower having an engine mounted to the upper surface of a mower deck and a muffler located beneath the mower deck. The muffler is mounted around the output end of the engine crankshaft between the mower deck and the blade. A shroud is provided which completely encases the engine with the exception of air inlets provided in the shroud.

Cooling air is drawn through the air inlets by the flywheel and is directed over the engine components by the shape of the shroud. An opening is provided in the mower deck below the engine through which the cooling air passes. The cooling air flows over the muffler to cool the external surface of the muffler. The exhaust gas created during engine operation exits the engine through a discharge pipe and enters the muffler. The exhaust gas flows through a serpentine-shaped wall formed in the muffler to reduce noise. The exhaust gas exits the muffler and mixes with the cooling air to further reduce the overall temperature of the engine. Further, a vacuum effect created beneath the mower deck by the rotating blade aids in drawing the exhaust gas outwardly from the muffler.

In one form thereof, a lawnmower is provided having a deck enclosing a blade. An internal combustion engine is attached to the deck having a crankshaft with an output end drivingly connected to the blade. A shroud having at least one air inlet formed. therein, the shroud otherwise substantially encasing the engine. An annular muffler is located about the output end of the crankshaft intermediate the deck and the blade.

In another form thereof, a lawnmower is provided including a deck enclosing a blade. An internal combustion engine is attached to the deck including a crankshaft with a first end having a flywheel mounted thereon and a second end drivingly connected to the blade. A shroud having at least one air inlet formed therein otherwise substantially encases the engine. An annular muffler is located about the second end of the crankshaft intermediate the deck and the blade. Cooling air is drawn into the shroud through the air inlets by the flywheel and the shroud directs the cooling air through the deck to the muffler. Exhaust gas from the engine flows through the muffler and the cooling air and the exhaust gas mix to lower the temperature of the engine.

In a further form thereof, in combination, a lawnmower is provided having a deck enclosing a blade and an internal combustion engine attached to the deck. The engine includes a crankshaft having an output end drivingly connected to the blade. A shroud is provided having at least one air inlet formed therein, the shroud otherwise substantially encasing the engine. A muffler is provided having a housing in fluid communication with the engine. The muffler is located about the output end of the crankshaft intermediate the deck and the blade.

One advantage of the present invention is that locating the muffler beneath the mower deck decreases engine noise. Further, the need for a heat shield over the muffler is obviated.

An additional advantage of the present invention is that the shroud in completely encasing the engine helps to reduce engine noise. Further, the shroud may be shaped to better direct cooling air to particular areas of the engine which produce the largest amounts of heat.

A further advantage of the present invention is that the cooling air that passes through the deck mixes with exhaust gas exiting the muffler to reduce the temperature of the exhaust gas and the overall temperature of the engine. Additionally, the mower blade promotes cooling of the muffler by creating a vacuum which increases air flow around the muffler.

The above-mentioned and other features and advantages of this invention, and the manner of attaining them, will become more apparent and the invention itself will be better understood by reference to the following description of embodiments of the invention taken in conjunction with the accompanying drawings, wherein:

Figure 1 is a perspective view of a lawnmower having a shroud in accordance with the present invention;

Figure 2 is an exploded perspective of the lawnmower of Figure 1;

Figure 3 is a partial sectional view of a first embodiment of an engine and deck assembly for the lawnmower of Figure 1;

Figure 4 is a partial sectional view of a second embodiment of an engine and deck assembly for the lawnmower of Figure 1;

Figure 5 is a bottom plan view of the lawnmower of Figure 1;

Figure 6 is an exploded perspective view of the muffler of Figure 5; and

Figure 7 is an exploded perspective view of the lawnmower of Figure 1 with the shroud removed for illustrative purposes.

Corresponding reference characters indicate corresponding parts throughout the several views. The exemplifications set out herein illustrate preferred embodiments of the invention, and such exemplifications are not to be construed as limiting the scope of the invention in any manner.

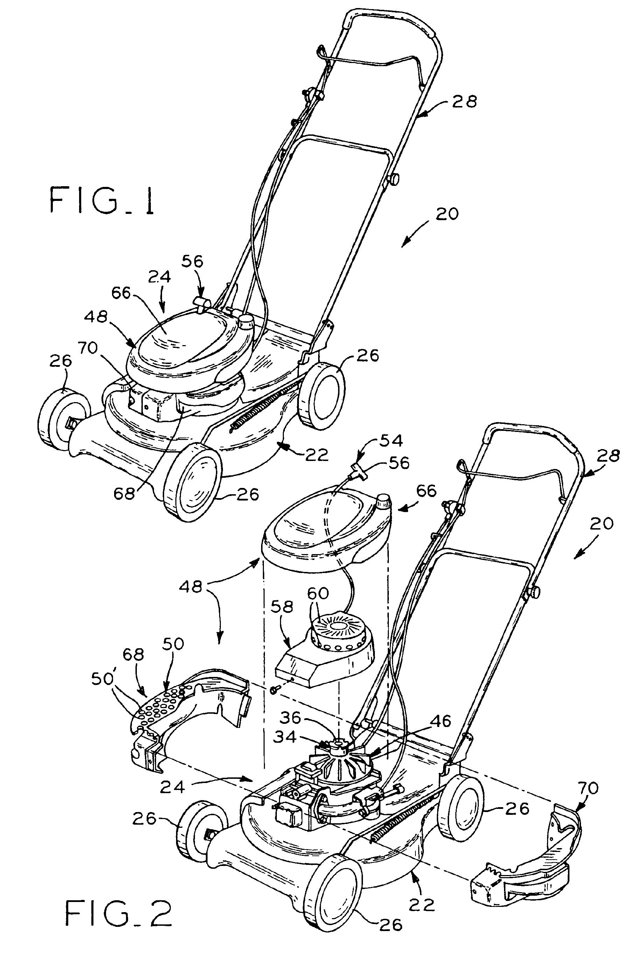

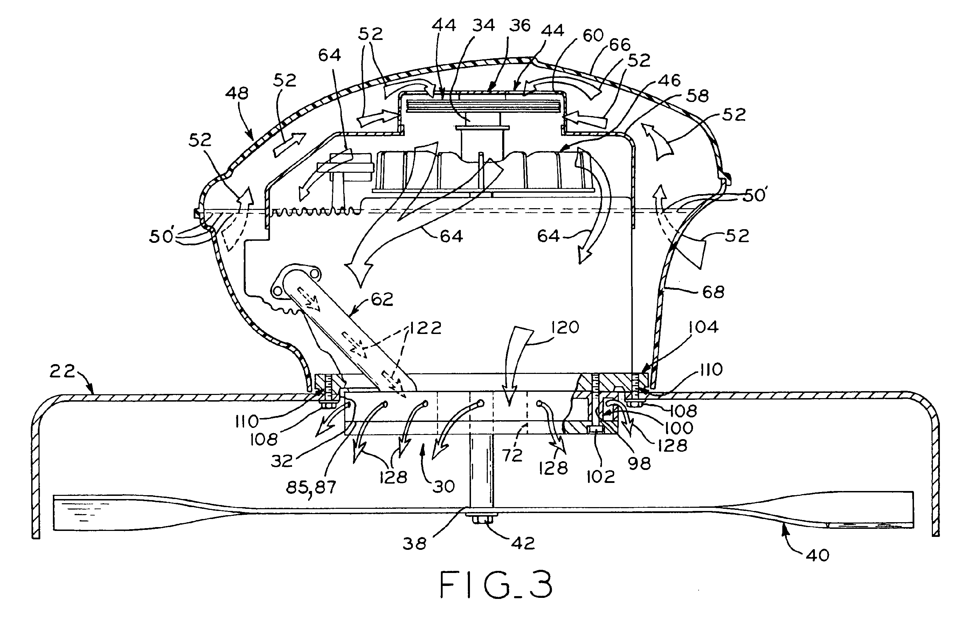

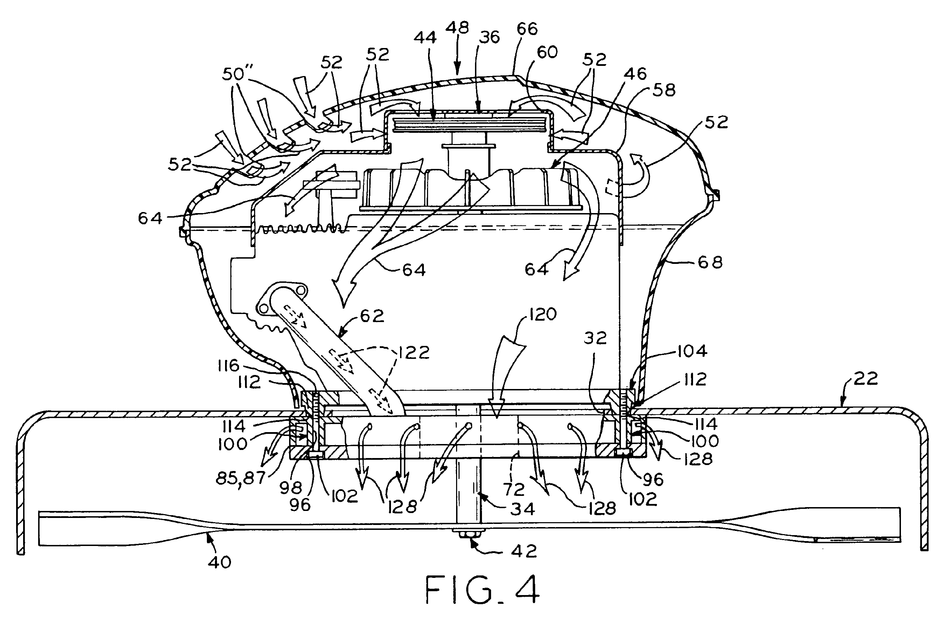

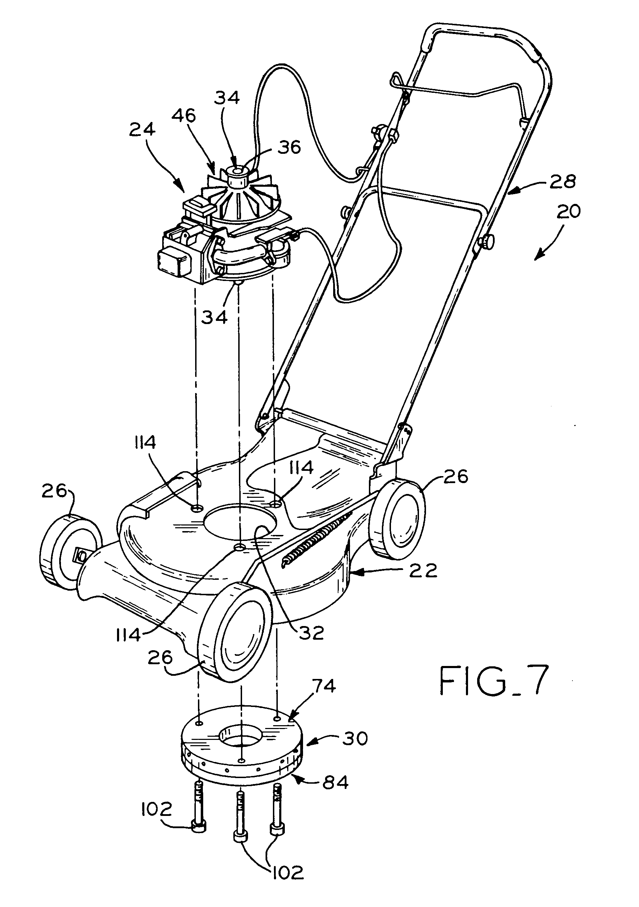

Referring to Figures 1, 2, and 5, lawnmower 20 includes deck 22 on which engine 24, wheels 26, handle 28, and muffler 30 are mounted. Engine 24 is mounted to the upper surface of deck 22, positioned above airflow aperture 32 (Figure 7) formed therein. Engine 24 is substantially encased by shroud 48 with the exception of air inlets 50 provided in shroud 48. Referring to Figures 3 and 4, muffler 30 is concentrically mounted with airflow aperture 32 beneath deck 22. Engine 24 includes crankshaft 34 having first end 36 and a second, or power take off (PTO) end 38. Second end 38 extends from the lower portion of engine 24 through airflow aperture 32 and muffler 30. Mower blade 40 is secured to second end 38 of crankshaft 34 by a fastener such as nut 42.

Referring to Figures 3 and 4, engine 24 includes recoil starter pulley 44 located at the first end 36 of crankshaft 34. Cord 54 is wrapped around starter pulley 44 having pull handle 56 mounted to one end thereof enabling the operator to pull cord 54 for engine starting (Figures 1 and 2). Mounted for rotation with crankshaft 34 is flywheel/blower 46, which draws cooling air into shroud 48 through air inlets 50 in the direction of arrows 52. The rotation of blower 46 draws air into air inlets 50 in shroud 48. Located over starter pulley 44 and blower 46 is housing 58 having openings 60 through which air is drawn into the intake system. A portion of the incoming air flows around the outside of engine 24 as indicated by arrows 64 to dissipate heat created by the engine components as will be described further hereinbelow. Another portion of the incoming air enters openings 60 in housing 58 and is mixed with fuel for engine combustion. The combustion process creates exhaust gas which exits the combustion chamber and enters discharge pipe 62. The exhaust gas flows through pipe 62 into muffler 30 as will be described further hereinbelow.

Referring to Figures 2, 3, and 4, shroud 48 is constructed from a plurality of pieces which are secured to one another in a tongue-and-groove manner by suitable fasteners, for example. Shroud 48 is constructed from a material such as molded plastic. Shroud 48 is shaped to direct the cooling air over the areas of the engine which have the largest amounts of heat. Shroud 48 includes top portion 66 and side portions 68 and 70. Side portions 68 and 70 stand approximately perpendicularly to deck 22 with portions 68 and 70 being located on respective opposite sides of engine 24. The lower edge of top portion 66 mates with the upper edges of side portions 68 and 70 to create a substantially sealed casing around engine 24 to significantly reduce engine noise. Air inlets 50 are provided in shroud 48 to allow air to enter the encased area. As described above, a first portion of the air is used for cooling engine 24 while a second portion of the air is used for engine combustion.

Air inlets 50 are formed to have any desired shape such as, e.g., circular, rectangular, or the like. Any number of air inlets may be provided to allow a sufficient amount of air to enter the encased engine. Referring to Figures 2 and 3, a first embodiment of shroud 48 includes air inlets 50' provided in side portion 68 in the form of a plurality of circular apertures. A second embodiment of shroud 48, shown in Figure 4, includes air inlets 50" provided in top portion 66 of shroud 40 in the form of slots extending laterally across top portion 66.

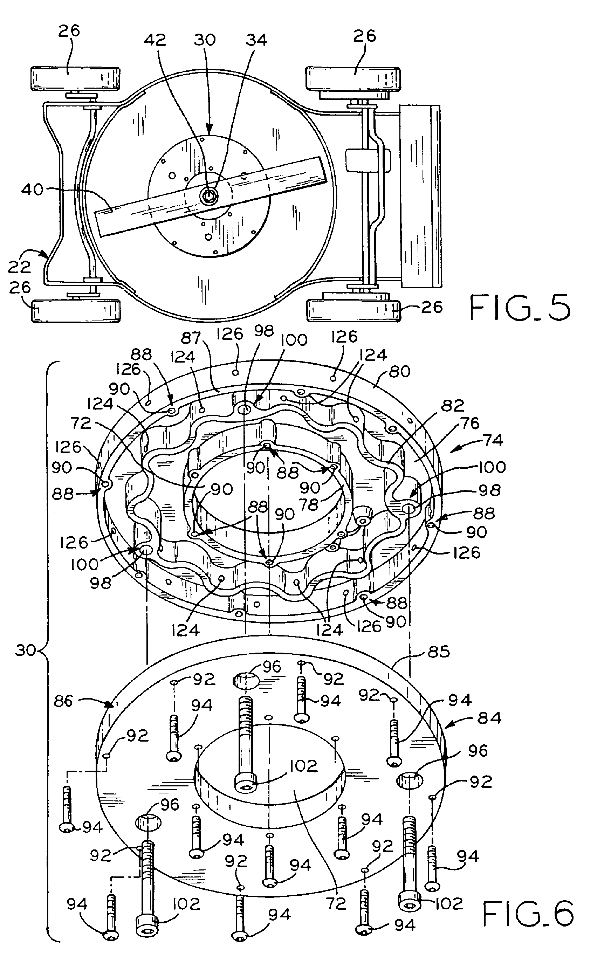

Referring to Figures 6 and 7, muffler 30 is annular, having opening 72 through the center thereof. Opening 72 is substantially aligned with airflow aperture 32 in deck 22 when muffler 30 is assembled to lawnmower 20. Muffler 30 is constructed from any suitable material such as, e.g., steel, which is able to withstand the heat of the exhaust gas produced during engine operation. Muffler 30 may be formed by any suitable method including roll or bend forming, stamping, casting, or the like.

Referring to Figure 6, muffler 30 includes base 74 having base plate 76 from which inner side wall 78 and outer side wall 80 depend substantially perpendicularly. Wall 82 is located between inner and outer walls 78 and 80, depending approximately perpendicularly from base plate 76. Intermediate wall 82 is serpentine-shaped to create a tuning effect within muffler 30 for reduction of noise produced by the exhaust gas. Walls 78, 80, and 82 are integrally formed with base plate 76. Cover 84 is constructed to have substantially the same diameter as outer side wall 80. Cover 84 is provided with integrally formed lip 86 having edge 85 which contacts edge 87 of outer wall 80.

Inner and outer walls 78 and 80 are provided with a plurality of bosses 88 integrally formed therewith. Each boss 88 has threaded aperture 90 formed therein, each of which align with one aperture 92 formed in cover 84. Threaded fasteners 94 pass through apertures 92 and engage apertures 90 to secure cover 84 to base 74. Apertures 96 are located in cover 84 and align with apertures 98 formed in bosses 100 integrally formed with serpentine-shaped wall 82. Fasteners 102 extend through apertures 96 and 98 to engage engine mount 104 (Figures 3 and 4), as will be discussed further hereinbelow.

Engine 24 and muffler 30 may be mounted to deck 22 by any suitable method including those described below. In a first embodiment illustrated in Figure 3, muffler 30 is directly mounted to engine mount 104 by threaded fasteners 102 to form an engine/muffler assembly. Airflow aperture 32 in deck 22 has a diameter which is larger than that of muffler 30. The engine/muffler assembly is lowered onto deck 22 with muffler 30 passing through airflow aperture 32. The diameter of engine mount 104 is larger than the diameter of airflow aperture 32 allowing engine mount 104 to rest upon deck 22 and support the engine/muffler assembly. Threaded fasteners 108 extend through apertures in deck 22 and into bosses 110 formed in engine mount 104 to secure the engine/muffler assembly to deck 22. Engine mount 104 is illustrated as being provided with three bosses 110, however, any desired number may be provided to secured engine 24 to deck 22.

Alternatively, a second embodiment of a mounting method for securing engine 24 and muffler 30 to deck 22 is illustrated in Figure 4. Engine mount 104 is provided with studs 112 integrally formed therewith. Studs 112 are received in apertures 114 located in mower deck 22, circumferentially spaced about airflow apertures 32 (Figures 4 and 7). Fasteners 102 extend through apertures 96 and 98 in muffler 30 to engage threaded apertures 116 provided in studs 112. Engine mount 104 is illustrated as being provided with three studs 112, however, any desired number may be provided to secured engine 24 to deck 22.

Referring to Figures 3 and 4, the cooling air entering shroud 48 flows around engine 24 and mixes with the exhaust gas exiting muffler 30 to reduce the overall temperature of engine 24 during engine operation. Rotation of blade 40 creates a vacuum in shroud 48 to help draw the cooling air into shroud 48 and downwardly toward deck 22. The cooling air exits shroud 48 through airflow aperture 32 in the direction of arrows 120. The cooling air flows through opening 72 and around the surfaces of muffler 30 to cool the muffler.

During engine operation, exhaust gas is produced as the combustion process occurs. The exhaust gas exits engine 24 through discharge pipe 62 extending from engine 24, through deck 22, and into muffler 30 (Figures 3 and 4). The exhaust gas flows from engine 24 through discharge pipe 62 into muffler 30 in the direction of arrows 122. The exhaust gas enters muffler 30 in the area defined between inner wall 78 and serpentine-shaped wall 82. The serpentine shape provides a tortuous path for the exhaust air entering muffler 30. The tortuous path is designed to provide a tuning effect to reduce the noise created by the exhaust gas in the muffler. The gas travels between walls 78 and 82 until reaching apertures 124 located in serpentine-shaped wall 82. The gas then passes through apertures 124 in wall 82 to an area defined between outer wall 80 and serpentine-shaped wall 82. From this area, the exhaust gas exits muffler 30 through apertures 126 formed into outer wall 80 as indicated by arrows 128. The rotation of blade 40 help to draw the exhaust gas through apertures 126. As the exhaust gas flows from muffler 30, the cooling air flowing around muffler 30 mixes with the exhaust gas to reduce the temperature of the expelled gas and thus reduce the temperature of the area underneath deck 22.

While this invention has been described as having preferred designs, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. A lawnmower (20) including a deck (22) substantially enclosing a blade (40) and an internal combustion engine (24) mounted to said deck, said engine including a crankshaft (34) having an output end (38) drivingly connected to said blade, **characterized by** a shroud (48) having at least one air inlet (50) therein, said shroud otherwise substantially enclosing said engine, and an annular muffler (30) located about said output end of said crankshaft between said deck and said blade.

2. The lawnmower (20) of Claim 1, **characterized in that** said shroud (48) comprises at least two separate shroud components (68, 70), said shroud components cooperating with one another to substantially enclose said engine (24).

3. The lawnmower (20) of Claim 1, **characterized in that** said muffler (30) comprises first and second housing components (74, 84), at least one of said housing components attached to an underside of said deck (22).

4. The lawnmower (20) of Claim 3, **characterized in that** said muffler (30) further includes at least one intermediate wall (82) disposed between said first and second housing components (74, 84).

5. The lawnmower (20) of Claim 4, **characterized in that** said intermediate wall (82) and at least one of said first and second housing components (74, 84) each include a plurality of apertures (124, 126).

6. The lawnmower (20) of Claim 1, **characterized by** an exhaust passage (62) extending between said engine (24) and said muffler (30), whereby exhaust gas from said engine is communicated to said muffler.

7. The lawnmower (20) of Claim 6, **characterized in that** said shroud (48) and said muffler (30) are in airflow communication with one another, whereby air from said shroud is directed into said muffler to mix with exhaust gasses within said muffler.

8. The lawnmower (20) of Claim 1, **characterized by**:
said engine (24) further comprising one of a plurality of studs (112) and a plurality of fasteners (102);
said muffler (30) further comprising the other of said plurality of studs and said plurality of fasteners; and
said deck (22) comprising a plurality of holes (114), said studs extending through said holes and receiving said fasteners to mount said engine and said muffler to opposite sides of said deck, said deck captured between said engine and said muffler.
